# EUROPÄISCHE PATENTSCHRIFT

(11) **EP 0 752 065 B1**
(45) Veröffentlichungstag und Bekanntmachung des Hinweises auf die Patenterteilung: **03.09.1997**
(21) Anmeldenummer: 95912137.7
(22) Anmeldetag: 14.03.1995
(51) Int. Cl.: F04D 27/02

(54) **VERFAHREN ZUR STEUERUNG DER BETRIEBSSPANNUNG EINES LÜFTERS IN ELEKTRISCHEN GERÄTEN**
PROCESS FOR CONTROLLING THE DRIVING VOLTAGE OF A FAN IN ELECTRICAL EQUIPMENT
PROCEDE DE COMMANDE DE LA TENSION D'EXPLOITATION DE VENTILATEURS DANS DES APPAREILS ELECTRIQUES

(30) Priorität: 21.03.1994 DE 4409614
(43) Veröffentlichungstag der Anmeldung: 08.01.1997
(73) Patentinhaber: Siemens Nixdorf Informationssysteme AG, 33106 Paderborn (DE)
(72) Erfinder: ADAM, Jürgen, D-89331 Burgau (DE); BUSCH, Peter, D-86179 Augsburg (DE)
(74) Vertreter: Fuchs, Franz-Josef, Dr.-Ing.
(86) Internationale Anmeldenummer: DE9500354
(87) Internationale Veröffentlichungsnummer: WO9525894

(56) Entgegenhaltungen:
- US-A- 5 197 858
- Week 9232, Derwent Publications Ltd., London, GB; AN 92-266106 & SE,A,467 475 (ERIKSSON) 20. Juli 1992
- PATENT ABSTRACTS OF JAPAN vol. 14, no. 264 (P-1057) 7. Juni 1990 & JP,A,02 073 414 (MITSUBISHI) 13. März 1990
- ELEKTOR, Nr.7, August 1992 Seite 22 L. SVENKERUD AND A. KRISTIANSEN 'PC-Lüftregler'
- EDN, Bd.35, Nr.26, 26. April 1990, NEWTON,MA,US Seiten 225 - 226, XP000120366 JAMES K KOCH 'Fan controller minimizes audible noise.'

## Beschreibung

Die Erfindung betrifft ein Verfahren zur Steuerung der Betriebsspannung eines Lüfters in elektrischen Geräten gemäß dem Oberbegriff des Anspruchs 1.

Bei elektrischen Geräten, die eine Stromversorgung mit Lüfterkühlung aufweisen, wird zur Geräuschreduzierung oft ein drehzahlgesteuerter Lüfter verwendet. Vor allem in ruhiger Büroumgebung wird dabei trotzdem das Lüftergeräusch mit herkömmlicher Temperatur/Drehzahlsteuerung als zu laut empfunden. Bei einer Absenkung der Lüfterdrehzahl ist zu beachten, daß die zu schützenden elektronischen Bauelemente im gesamten Last- und Temperaturbereich unterhalb einer maximal zulässigen Bauteiletemperatur bleiben.

Nach einer bisher bekannten Methode wird die Lufttemperatur der Stromversorgung mit Hilfe eines temperaturabhängigen Bauelementes, zum Beispiel mit einem sogenannten NTC- oder PTC-Widerstand, das ist ein Widerstand, dessen Widerstandswert bei Abkühlung beziehungsweise Erwärmung entsprechend größer wird, und einer Leistungsstufe in eine Steuerspannung für den Lüfter umgesetzt. Die dabei verwendete Temperatur/Spannungscharakteristik ist dabei relativ flach beziehungsweise breit, das heißt, die Steuerspannung steigt in einem breiten Bereich, zum Beispiel zwischen 20 Grad Celsius und 60 Grad Celsius, von einem Grundspannungspegel zur maximalen Lüfterspannung an.

Bei manchen Lüftersteuerungen wird der Temperatursensor auf einem Kühlblech von Leistungsbauteilen in der Stromversorgung montiert, so daß die Ausgangsleistung der Stromversorgung bei der Einstellung der Lüfterbetriebsspannung mitberücksichtigt wird.

Aus US-A-5 197 858 ist eine temperaturgesteuerte Geschwindigkeitseinstellung von Lüftern in elektrischen Geräten bekannt, die in der Weise die Steuerung des Lüfters ausführt, daß bis zu einer ersten Gerätetemperaturgrenze die Lüfterdrehzahl konstant bei einem ersten Wert eingestellt wird. Danach wird die Lüfterdrehzahl kontinuierlich hochgeregelt bis zu einer zweiten Gerätetemperaturgrenze. Oberhalb der zweiten Gerätetemperaturgrenze bleibt die Lüfterdrehzahl konstant.

In diesem Zusammenhang ist zwar eine Schaltungsanordnung angegeben, bei der die jeweiligen Gerätetemperaturgrenzen eingestellt werden können, zwischen denen der kontinuierliche Anstieg der Lüfterdrehzahl erfolgen soll. Es ist aber tatsächlich nur das Prinzip angegeben, wie eine Regelung der Lüfterdrehzahl durchgeführt sein soll. Zwar steht die Regelung der Lüfterdrehzahl im Zusammenhang mit einer Reduzierung des Lüftergeräusches. Es wird aber kein Vorschlag gemacht, wie das Lüftergeräusch bei Aufrechterhaltung der Kühlfunktion für ein zugehöriges elektrisches Gerät maximal reduziert werden kann.

Aus Svenkerud/Kristiansen: "PC-Lüfterregler" in: DE-Z "Elektor", Heft 7-8/92, Seite 22 ist eine Schaltungsanordnung zur Regelung der Lüfterdrehzahl eines Lüfters in einem elektrischen Gerät bekannt, für die im Prinzip das gleiche wie für die US-Schaltungsanordnung gilt, das heißt, es ist kein Hinweis auf eine Regelung gegeben, bei der eine maximale Reduzierung des Lüftergeräusches bei Aufrechterhaltung der Kühl funktion für das zugehörige elektrische Gerät gegeben ist.

Aufgabe der Erfindung ist es, ein Verfahren zur Steuerung der Betriebsspannung eines Lüfters in elektrischen Geräten anzugeben, durch das auf billige Weise eine maximale Geräuschreduzierung beim Lüfter unter Aufrechterhaltung einer notwendigen Kühlleistung erzielt wird.

Diese Aufgabe wird durch die im kennzeichnenden Teil des Anspruchs 1 angegebenen Verfahrensschritte gelöst.

Danach wird der Lüfter stets mit einer möglichst niedrigen Betriebsspannung betrieben. Dies wird durch folgende Punkte erreicht.

Es wird als Referenzbauelement für die Bestimmung einer Temperatur, auf die geregelt werden soll, ein Bauelement in der Stromversorgung verwendet, weil hier Bauelemente gegeben sind, deren Temperaturverhalten sehr gut proportional mit der Geräteleistung übereinstimmen und daher eine Aussage darüber zulassen, wie heiß andere Bauelemente im Gerät im einzelnen werden. Von daher ist es nicht notwendig, andere temperaturkritische Bauelemente zusätzlich zu überwachen, auch wenn das ohne weiteres noch zusätzlich gemacht werden könnte. Es ist lediglich der Zusammenhang zwischen dem Referenzbauelement und einem jeweiligen anderen Bauelement zu ermitteln und dann die Regelung der Temperatur des Referenzbauelementes in der Weise einzustellen, daß die maximale Betriebstemperatur eines jeweils gewünschten anderen Bauelementes mitberücksichtigt wird.

Insbesondere wird die Ausgangsdiode eines Ausgangskreises der Stromversorgung mit der größten abzugebenden Leistung verwendet, weil dieses Bauteil mit eines der am heißesten werdenden Bauelemente ist und dieses Bauteil zudem in der Regel bereits auf einem Kühlblech montiert ist, so daß ein entsprechend träges Temperaturverhalten gegeben ist und ein Temperatursensor sehr leicht vorgesehen werden kann.

Durch die Steuerung des Lüfters gemäß der Erfindung wird die Drehzahl des Lüfters erst extrem spät hochgefahren und dann immer nur soweit, daß eine ausreichende Kühlung gerade noch gegeben ist.

Nachfolgend wird ein Ausführungsbeispiel der Erfindung anhand einer Zeichnung näher erläutert. Darin zeigen
Figur 1 ein elektrisches Gerät mit einer Lüftersteuerung nach einer bekannten Art in Prinzipdarstellung,
Figur 2 ein Temperaturregelverhalten des elektrischen Gerätes nach Figur 1,
Figur 3 ein elektrisches Gerät mit einer Lüftersteuerung gemäß der Erfindung in Prinzipdarstellung, und
Figur 4 ein Temperaturregelverhalten des elektrischen Gerätes nach Figur 3.

In den nachfolgenden Figurenbeschreibungen sind jeweils gleiche Gegenstände mit gleichen Bezugszeichen gekennzeichnet.

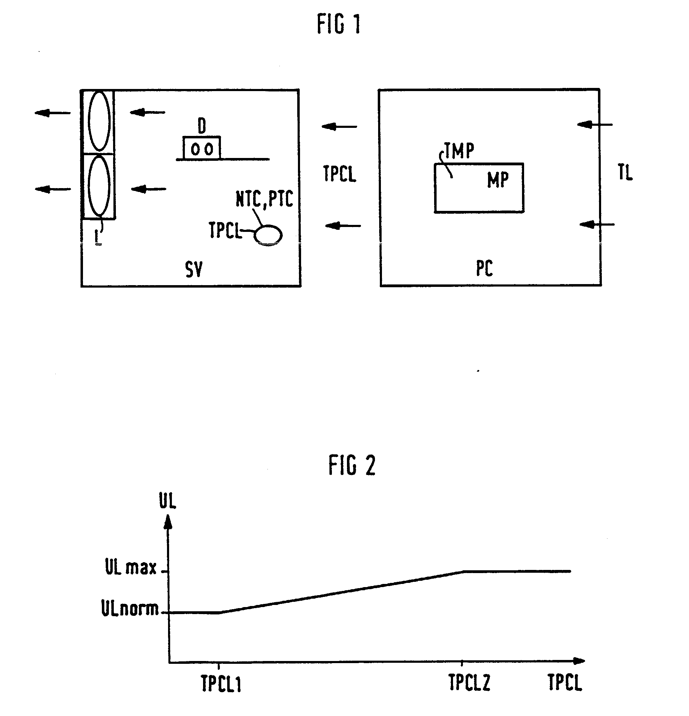

In der Figur 1 ist ein elektrisches Gerät gezeigt, das aus einer Hauptkomponente PC und einer Stromversorgung SV zusammengesetzt ist. Ein derartiges Gerät kann beispielsweise ein Personalcomputer sein.

In der Stromversorgung SV ist ein Lüfter L angeordnet. Der Lüfter L erzeugt im elektrischen Gerät einen Luftstrom, der durch Pfeile angezeigt ist. Dabei tritt über seitliche Schlitze eine Luft mit der Temperatur TL in die Hauptkomponente PC ein. Die Luft tritt dann aus der Hauptkomponente PC mit der Temperatur TPCL aus und in die Stromversorgung SV ein. In der Stromversorgung SV wird die eintretenden Luft mit der Temperatur TPCL durch entweder einen temperaturabhängigen Widerstand mit einem positiven Temperaturkoeffizienten PTC oder durch einen temperaturabhängigen Widerstand mit einem negativen Temperaturkoeffizienten gemessen. In Abhängigkeit von der gemessenen Lufttemperatur wird die Betriebsspannung des Lüfters reguliert. Durch den Lüfter wird dann die Luft in der Stromversorgung aus der Stromversorgung geblasen. Durch den Sog wird frische Luft in die Hauptkomponente PC eingesogen.

Die Steuerung der Betriebsspannung des Lüfters L erfolgt entsprechend einer breiten Kennlinie, wie sie in der Figur 2 dargestellt ist. Bei einer Lufttemperatur TPCL1 wird eine Spannung ULnorm für den Lüfter L erzeugt, bei der der Lüfter L mit einer Grunddrehzahl dreht. Bis zu einer Lufttemperatur TPCL2, die einer maximal zulässigen Temperatur entspricht, bei der angenommen wird, daß alle Bauelemente in dem elektrischen Gerät noch einwandfrei arbeiten, wird die Lüfterspannung UL bis zu einer Höhe von ULmax hochgeregelt. Bei der maximalen Lüfterspannung ULmax dreht der Lüfter mit seiner maximalen Drehzahl.

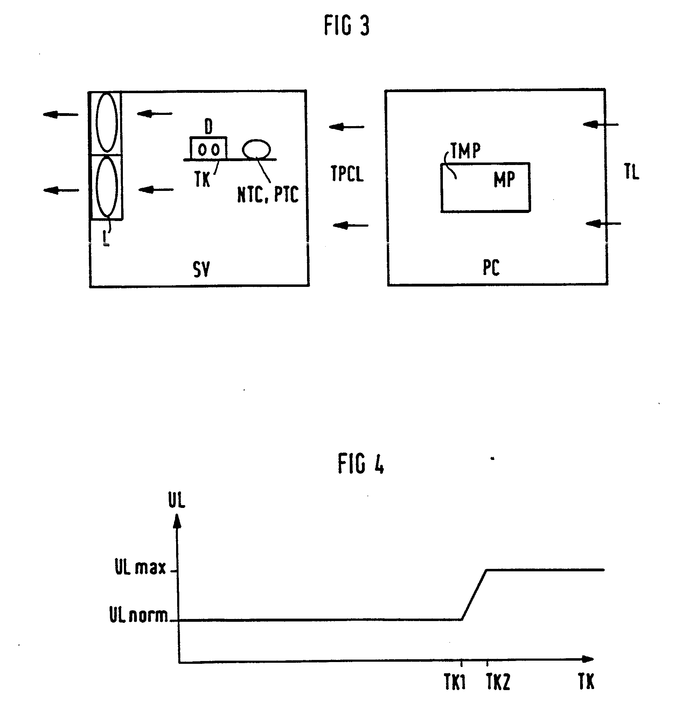

Der in den Figuren 1 und 2 dargestellt Sachverhalt, stellt einen Stand der Technik dar. Der in den Figuren 3 und 4 angezeigte Sachverhalt stellt eine Lösung gemäß der Erfindung dar.

In der Figur 3 ist das gleiche elektrische Gerät wie in der Figur 1 dargestellt mit dem Unterschied, daß die Temperatur zum Erzeugen einer Lüfterspannung UL nicht mehr anhand der Lufttemperatur innerhalb der Stromversorgung SV sondern anhand der Kühlkörpertemperatur TK des Kühlkörpers für eine Ausgangsdiode D ermittelt wird. Zu diesem Zweck sind die temperaturabhängigen Widerstände PTC beziehungsweise NTC auf dem Kühlkörper der Diode D angeordnet.

Die Ermittlung der Lüfterspannung UL erfolgt dabei gemäß der in der Figur 4 angegebenen Kennlinie. Gemäß der Kennlinie bleibt die Lüfterspannung bis zu einer ersten Kühlkörpertemperatur TK1 konstant bei der Grundlüfterspannung ULnorm. Die erste Kühlkörpertemperatur TK1 stellt eine Grenztemperatur dar. Ab der Grenztemperatur TK1 steigt die Lüfterspannung UL kontinuierlich rasch an. Bei einer höheren zweiten Kühlkörpertemperatur TK2 ist die Lüfterspannung UL mit einem Wert ULmax maximal. Die zweite Kühlkörpertemperatur TK2 ist in der Weise gewählt, daß alle Bauelemente in dem elektrischen Gerät noch unterhalb der maximal zulässigen Betriebstemperatur sind. Die Grenztemperatur TK1 ist im Bereich der zweiten Kühlkörpertemperatur TK2 angesiedelt.

Im weiteren folgt eine allgemeine Beschreibung des in den Figuren 3 und 4 dargestellten Sachverhalts.

Die Steuerung für den Lüfter L wird im einfachsten Fall umgewandelt in eine durch den Lüfter bewirkte Temperaturregelung des Hauptkühlkörpers in der Stromversorgung SV. Dabei wird von folgender Überlegung ausgegangen: Bei der Lüftung eines elektrischen Gerätes geht es darum, die Bauteiletemperatur des wärmsten (elektrischen beziehungsweise elektronischen) Bauelements auf einen vorgegebenen maximalen Wert, der unterhalb der jeweiligen Zerstörungsgrenze liegt, zu begrenzen. Üblich ist zum Beispiel eine Temperatur von 100 Grad Celsius. Die in Frage kommenden Bauelemente können sowohl im Verbraucher als auch in der Stromversorgung sein. Im Beispiel eines Personalcomputers kann das ein Mikroprozessor MP und gleichzeitig in der Stromversorgung eine 5 Volt-Ausgangsdiode D sein. Je nach Ausbaugrad und Auslastung wird in diesem Fall einmal die Ausgangsdiode D und in einem anderen Lastfall der Mikroprozessor MP heißer. Wenn Kosten und Aufwand nur eine untergeordnete Rolle spielen, kann jedes kritische Bauelement einzeln mit einem Temperaturfühler überwacht werden. Dabei bestimmt die Temperatur des heißesten Bauelementes die Spannung für den Lüfter L. Die niedrigste Drehzahl für den Lüfter L ergibt sich aus der niedrigsten zulässigen Betriebsspannung ULnorm des Lüfters L, bei der dieser noch sicher anläuft. Um nun die niedrigste mögliche Drehzahl über den gesamten Lastbereich für den Lüfter L zu erreichen, wird bei steigender Bauteiletemperatur weiterhin diese niedrigste Lüfterdrehzahl beibehalten. Erst bei Überschreiten einer Grenztemperatur TK1 beginnt die Lüfterspannung UL zu steigen. Die Steigung der Temperatur/Spannungskennlinie ist relativ steil (wesentlich steiler als beispielsweise die in der Figur 2 dargestellte Kennlinie). Bei einer oberen Kühlkörpertemperatur TK2, die aus Toleranzgründen etwas unterhalb der maximalen Bauteiletemperatur liegt, wird die maximale Lüfterspannung ULmax erreicht. Durch diese Form der Temperatur/Spannungskennlinie erhält man bei niedriger Last die niedrigste mögliche Drehzahl des Lüfters L, während bei höherer Last die minimal notwendige Drehzahl des Lüfters sich einstellt, um das heißeste Bauelement mit einem Sicherheitsabstand unterhalb seiner Maximaltemperatur zu betreiben. Vom Temperaturverhalten des heißesten Bauelementes her betrachtet entspricht das einer Temperaturregelung dieses Bauelementes über die Lüfterdrehzahl.

Zwei vorteilhafte Ausgestaltungen sind denkbar: Um Kosten und Aufwand zu senken, kann die Anzahl der Temperaturfühler auf einen einzigen Fühler reduziert werden, der thermisch mit dem Kühlkörper der 5 Volt-Ausgangsdiode D in der Stromversorgung SV verbunden ist. In den meisten Fällen ist dies das heißeste Bauelement in der Stromversorgung SV. Durch Messungen im Gesamtsystem bei verschiedenen Ausbaugraden, Auslastungen und Außentemperaturen muß nun ermittelt werden, ob es ein Bauelement im Verbraucher gibt, das bei dieser Regelung seinen Arbeitstemperaturbereich überschreitet. Ist dies der Fall, müssen die beiden Temperaturgrenzen TK1 und TK2 entsprechend abgesenkt werden, bis alle Bauelemente unter allen Betriebsbedingungen unterhalb ihrer Maximaltemperatur bleiben. Um die niedrigste Betriebsspannung ULnorm für den Lüfter noch weiter abzusenken, kann beim Start des Lüfters L seine Betriebsspannung kurzzeitig angehoben werden, damit dieser sicher anläuft. Die danach sich einstellende niedrigste zulässige Betriebsspannung kann niedriger sein, da normalerweise das Anlaufen des Lüfters L mehr Spannung erfordert als danach der Betrieb mit konstanter Drehzahl.

## Patentansprüche

1. Verfahren zur Steuerung der Betriebsspannung eines Lüfters in einem elektrischen Gerät zur Kühlung von in dem elektrischen Gerät verwendeter elektrischer Bauelemente, die abhängig von einer Augenblicksleistung und einer Umgebungstemperatur eine Bauteiletemperatur bis über eine höchstzulässige Betriebstemperatur annehmen können, **dadurch gekennzeichnet**, daß die Temperatur einer Ausgangsdiode (D) eines Ausgangskreises der Stromversorgung (SV) des elektrischen Gerätes überwacht wird, und
daß die Steuerung der Betriebsspannung des Lüfters in Abhängigkeit von der Bauteiletemperatur dieser Ausgangsdiode (D) in der Weise durchgeführt wird, daß bis zu einer im Bereich der höchstzulässigen Bauteiletemperatur eines in dem elektrischen Gerät absolut am heißesten werdenden Bauelementes liegenden Grenztemperatur die Betriebsspannung des Lüfters (L) konstant minimal und dann kontinuierlich rasch ansteigend in Abhängigkeit von der Temperatur bis zu einer solchen Betriebsspannung geregelt wird, bei der durch die damit zusammenhängende Erhöhung der Lüfterdrehzahl noch eine Bauteiletemperatur des absolut am heißesten werdenden Bauelementes zwar oberhalb der Grenztemperatur aber unterhalb der höchstzulässigen Bauteiletemperatur dieses Bauelementes gewährleistet ist.

2. Verfahren nach Anspruch 1, **dadurch gekennzeichnet**, daß eine höhere Anlaufspannung zum Anlaufen des Lüfters (L) als nach dem Anlaufen als minimale Betriebsspannung des Lüfters (L) verwendet wird.

## Claims

1. Method for controlling the operating voltage of a fan in an electrical equipment for cooling electrical physical elements used in the electrical equipment, which physical elements can assume a component temperature up to above a maximum permissible operating temperature as a function of an instantaneous power and an ambient temperature, characterized
in that the temperature of an output diode (D) of an output circuit of the power supply (SV) of the electrical equipment is monitored, and
in that the operating voltage of the fan is controlled as a function of the component temperature of this output diode (D) in such a manner that up to a limit temperature which is in the region of the maximum permissible component temperature of a physical element which absolutely becomes the hottest in the electrical equipment, the operating voltage of the fan (L) is regulated at a constant, minimum level, and is then regulated to rise continuously and rapidly as a function of the temperature up to an operating voltage at which the increase in the fan rotation speed associated therewith still ensures that, although the component temperature of the physical element which absolutely becomes the hottest is still above the limit temperature, it is below the maximum permissible component temperature of this physical element, however.

2. Method according to Claim 1, characterized in that a higher starting voltage is used for starting the fan (L) than the minimum operating voltage of the fan (L) after starting.

## Revendications

1. Procédé de commande de la tension de régime d'un ventilateur dans un appareil électrique, pour refroidir des composants électriques qui sont utilisés dans l'appareil électrique et qui peuvent prendre une température dépassant une température de régime maximale admissible, en fonction d'une puissance momentanée et d'une température ambiante, caractérisé en ce que la température d'une diode de sortie (D) d'un circuit de sortie de l'alimentation en courant (SV) de l'appareil électrique est surveillée, et en ce que la commande de la tension de régime du ventilateur est exécutée en fonction de la température de cette diode de sortie (D), de telle manière que jusqu'à !'atteinte d'une température limite se situant dans la plage de la température maximale admissible d'un composant s'échauffant le plus, de manière absolue, dans l'appareil électrique, la tension de régime du ventilateur (L) est réglée en continu sur le minimum, puis en continu en augmentation rapide, en fonction de la température, jusqu'à une telle tension de régime que, grâce à l'augmentation corrélative de la vitesse du ventilateur, une température du composant s'échauffant le plus, d'une manière absolue, qui est certes supérieure à la température limite mais inférieure à la température maximale admissible de ce composant, est assurée.

2. Procédé selon la revendication 1, caractérisé en ce que pour faire démarrer le ventilateur (L), on applique une tension de démarrage qui est plus élevée que celle appliquée après le démarrage comme tension de régime minimale du ventilateur (L).
